# EUROPEAN PATENT SPECIFICATION

(11) **EP 4 448 855 B1**
(45) Date of publication and mention of the grant of the patent: **12.08.2026**
(21) Application number: 23707611.2
(22) Date of filing: 26.01.2023
(51) Int. Cl.: D03D 1/00, D03D 15/47, D03D 15/54, H02G 3/04, D02G 3/36, D02G 3/44

(54) **SELF-WRAPPING WOVEN SLEEVE WITH WEAR INDICATOR YARNS AND METHOD OF CONSTRUCTION THEREOF**
SELBSTWICKELNDE GEWEBTE HÜLSE MIT VERSCHLEISSINDIKATORGARNEN UND VERFAHREN ZUR HERSTELLUNG DAVON
MANCHON TISSÉ À ENVELOPPEMENT AUTOMATIQUE AVEC FILS INDICATEURS D'USURE ET SON PROCÉDÉ DE CONSTRUCTION

(30) Priority: 26.01.2022 US 202263303450 P; 25.01.2023 US 202318101368
(43) Date of publication of application: 23.10.2024
(73) Proprietor: Systems Protection Group US LLC, Northville, Michigan 48168 (US)
(72) Inventor: BECHIR, Nizar, 60141 Ivors (FR); HMILA, Amal, 60800 Crepy en Valois (FR)
(74) Representative: Kurig, Thomas
(86) International application number: PCT/US2023/061323
(87) International publication number: WO 2023/147396

(56) References cited:
- WO-A1-98/54393
- DE-T2- 69 605 150
- DE-T2- 69 717 442
- US-A1- 2014 090 739

## Description

### CROSS-REFERENCE TO RELATED APPLICATION

This application claims the benefit of U.S. Provisional Application Serial No. 63/303,450, filed January 26, 2022, and priority to U.S. Application Serial No. 18/101,368 filed January 25, 2023.

### BACKGROUND OF THE INVENTION

### 1. Technical Field

This invention relates generally to woven sleeves for protecting elongate members, and more particularly to self-wrapping woven sleeves.

### 2. Related Art

It is known to contain and protect elongate members, such as wires and wire harnesses, for example, in protective woven sleeves, such as in automobiles, aircraft or aerospace craft, to provide protection to the wires against abrasion, fluid and thermal affects. In order to provide the desired protection to the elongate members, the physical integrity of the woven fabric of forming a wall of the sleeve must not be compromised. Although woven sleeves generally provide suitable protection to an elongate member, such as a wire harness, conduit or the like, being protected within a central cavity of the woven sleeve, the desired protection can be diminished when the woven fabric becomes damage, such as by being abraded. If one or more of the yarns of the woven fabric become abraded, the entire structure of the woven fabric can ultimately be compromised, particularly if the abraded yarn(s) break. When the structure of the woven fabric becomes compromised, the level of protection to the elongate member is diminished, and thus, the intended function of the elongate member can be compromised. Accordingly, it is desired to know when the structural integrity of the woven sleeve is becoming comprised to allow proper maintenance to be performed to the sleeve prior to the intended function of the elongate member being compromised. From US 2014/090739 A1 there is known a textile sleeve with twisted hybrid fill yarn and method of construction thereof. From DE 69605150 T2 there is known an equipment against mechanical dangers. From WO 98/54393 A1 there is known cutting heat-shrinkable fabrics. From DE 69717442 T2 there is known a wear protection.

### SUMMARY OF THE INVENTION

One aspect of the invention provides a woven sleeve according to claim 1.

In accordance with the invention, at least some of the weft yarns are provided as the bi-component yarns, with the weft bi-component yarns having at least one of the central core and outer sheath as the heat-settable material.

In accordance with another aspect of the invention, a method according to claim 8 is provided. Preferred embodiments are mentioned in the subclaims.

### BRIEF DESCRIPTION OF THE DRAWINGS

These and other aspects, features and advantages will become readily apparent to those skilled in the art in view of the following detailed description of presently preferred embodiments and best mode, appended claims, and accompanying drawings, in which:
Figure 1 is schematic perspective view of a woven, self-wrapping sleeve constructed in accordance with one aspect of the invention, with the sleeve shown wrapped about and protecting an elongate member therein;
Figure 2 is an enlarged schematic fragmentary view of a woven wall of the woven, self-wrapping sleeve of Figure 1;
Figure 3A is an end view of an indicator bi-component yarn constructed in accordance with a non-limiting embodiment of the invention shown in a non-worn state;
Figure 3B is a view similar to Figure 3A, with the indicator bi-component yarn shown in a worn state, wherein a central core of the bi-component yarn becomes discernably visible to indicate it is time to replace with worn self-wrapping sleeve; and
Figure 4 is a weave diagram of a woven sleeve constructed in accordance with an aspect of the disclosure.

### DETAILED DESCRIPTION OF PREFERRED EMBODIMENTS

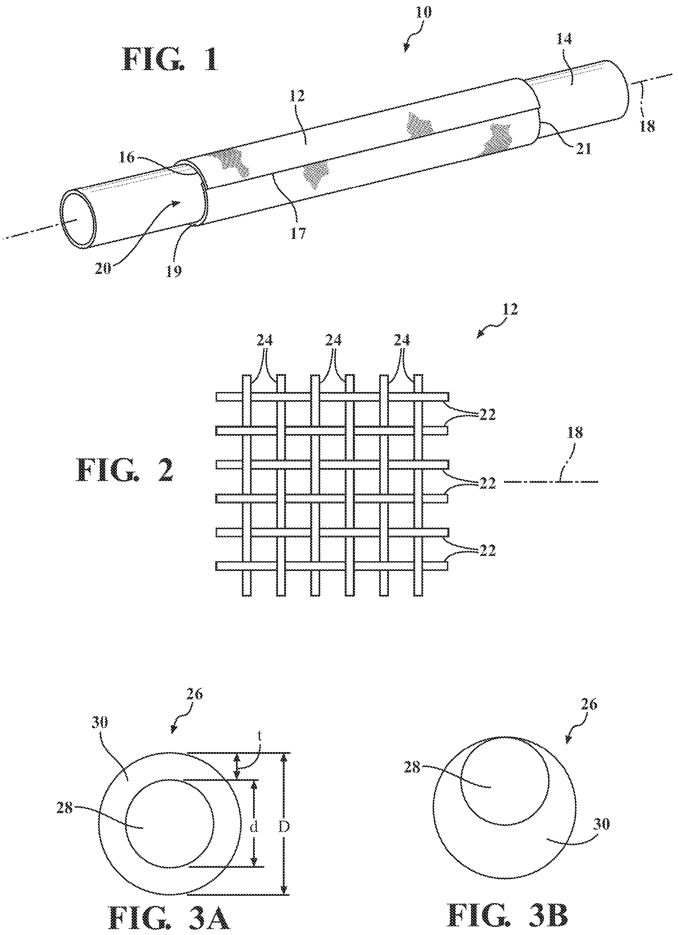

Referring in more detail to the drawings, Figure 1 shows schematic representation of a self-wrapping woven sleeve, referred to hereafter as sleeve 10, constructed in accordance with one aspect of the invention. The sleeve 10 has a self-wrapping elongate wall, referred to hereafter as wall 12, for routing and protecting an elongate member(s), such as a fluid conduit, gas conduit, wires or a wire harness 14, for example, from exposure to abrasion and the ingress of contamination, debris and the like. The wall 12 has opposite, lengthwise extending edges 16, 17 extending generally parallel to a longitudinal central axis 18 between opposite ends 19, 21. The edges 16, 17 are biased into overlapping relation with one another in "cigarette wrapped" fashion to fully enclose the elongate member 14 within a central cavity 20 of the sleeve 10. The bias imparted by the wall 12 is what causes the wall 12 to be "self-wrapping." Accordingly, while in a relax state, the opposite edges 16, 17 are biased into overlapping relation with one another. The cavity 20 extends along the longitudinal central axis 18 and is readily accessible along the full length of the wall 12, via manual separation of the opposite edges 16, 17 away from one another under an applied force sufficient to separate the opposite edges 16, 17 against the bias imparted by the wall 12. As such, the elongate member(s) 14 can be readily disposed radially, relative the axis 18, into the cavity 20, and conversely, removed from the cavity 20, such as during service.

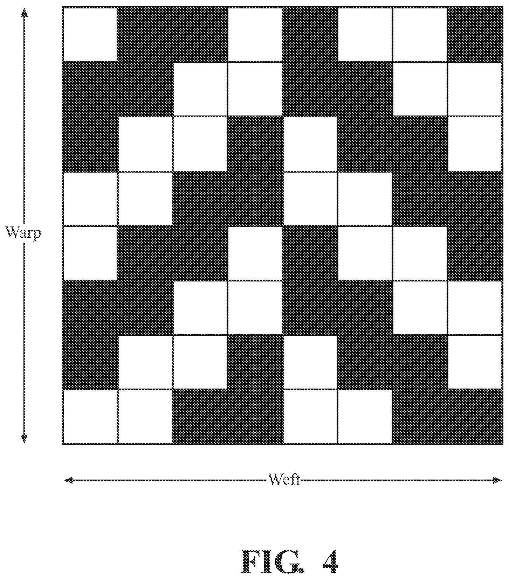

The wall 12 is woven with warp yams 22 extending generally parallel to the central longitudinal axis 18 and fill yarns, also commonly referred to as weft yams 24, extending generally circumferentially about the wrapped wall 12 in generally transverse relation to the warp yarns 22. At least some or all of the weft yarns 24 are provided as heat-settable yarns, such that upon heat-setting the fill yarns 24 to a heat-set state while in a curled, wrapped configuration, the wall 12 is biased to self-curl under a bias imparted by the heat-set fill yarns 24, also referred to as self-wrap, such that the opposite edges 16, 17 are biased into overlapping relation with one another. The bias is imparted by the heat-set weft yarns 24 into their curled configuration about the central longitudinal axis 18, thereby rendering the wall 12 self-curling, also referred to as self-wrapping. In accordance with a non-limiting embodiment, the wall 12 can be woven with a weave pattern shown in Figure 4, though it is to be recognized that any suitable weave pattern could be used, depending on the requirement of the application.

Depending on the application needs, the wall 12 can be constructed having any suitable size, including length and diameter. When the wall 12 is in its self-wrapped tubular configuration, generally free from any externally applied forces, the edges 16, 17 preferably overlap one another in self-biased fashion at least slightly to fully enclose the central cavity 20, and thus, provide enhanced protection to the elongate member(s) 14 contained in the cavity 20. The edges 16, 17 are readily extendable away from one another under a manually applied external force sufficient to overcome the shape memory bias heat-set into the weft yams 24 to at least partially open and expose the cavity 20. Accordingly, the elongate member(s) 14 can be readily disposed into the cavity 20 during assembly or removed from the cavity 20 during service. Upon releasing the manually applied external force, the opposite edges 16, 17 return automatically to their curled shape via the heat-set bias, thereby bringing the opposite edges 16, 17 into overlapping relation with one another under the bias imparted by the heat-set weft yarns 24.

The warp yams 22 can be provided including any suitable monofilament and/or multifilament material. As such, the warp yarns 22 can be provided entirely as monofilaments; entirely as multifilaments, or as both monofilaments and multifilaments, if desired. Multifilaments are used to increased the "coverage" protection and to enhance flexibility, when desired. Coverage protection is enhanced with multifilaments due the ability of individual filaments of the multifilaments to spread and conform with adjacent yarns, thereby occupying an increased surface area relative to monofilament yarns. The warp yarns 22 can be provided of any desired thermoplastic material, such as one or more of polyester, PPS, Nomex, by way of example and without limitation, and further can include inorganic material, such as one or more of fiberglass and basalt, by way of example and without limitation.

The weft yarns 24 can be provided including any suitable monofilament and/or multifilament material, including heat-settable monofilament and/or multifilament polymeric material. As such, the weft yarns 24 can be provided as both heat-settable monofilaments (though non-heat-settable monofilaments can be used) and high coverage multifilaments. To provide the wall 12 with increased self-wrapping capacity and increased optical coverage, to inhibit seeing through the wall 12 into the cavity 20, thereby enhancing protection against the ingress of contamination, the weft yam 24 monofilaments and multifilaments can be woven in alternating fashion with one another along the length of the sleeve 10. The weft yams 24 can be provided of any desired thermoplastic material, such as one or more of polyester, PPS, Nomex, by way of example and without limitation, and further can include inorganic material, such as one or more of fiberglass and basalt, by way of example and without limitation.

At least some of the warp yarns 22 and/or weft yarns 24 include bi-component yarns 26 (Figure 3A) having a central core 28 and an outer sheath 30 encircling and encapsulating the central core 28. The bi-component yarns 26 are considered herein as a monofilament (single filament), although having a central core/outer sheath construction. The central core 28 and the outer sheath 30 are different colors from one another, such that upon a portion of the outer sheath 30 being split or worn (Figure 3B) through its thickness (t; Figure 3A), the color of the central core 28 becomes discernably visible relative to the different color of the outer sheath 30, such as to an observer or imaging apparatus viewing an outer surface of the sleeve 10. Upon the central core 28 becoming visible as a result of being exposed, an indication is provided that it is time to replace the sleeve 10 prior to the functionality of the elongate member 14 being compromised. Although the outer sheath 30 has become worn and/or cracked sufficiently to expose the central core 28, the wall 12, as a result of the unworn core 28, is still able to provide the desired protection to the elongate member 14 to prevent damage to the elongate member 14 for a sufficient period of time to allow the sleeve 10 to be serviced and/or replaced. If the sleeve 10 is not serviced or replaced after the visual indication (exposed central core 28) originates, the potential for damage to the elongate member(s) 14 increases over time.

According to the invention, at least some of the weft yarns 24 can be provided as the bi-component yarns 26. Further yet, at least some of the weft bi-component yarns 26 are provided with the central core 28 formed from one color of heat-settable material, and preferably a bright, easy to visualized color, while the outer sheath 30 is formed from a different color material. The central core 28 and the outer sheath 30 can be formed of the same material or different materials. In accordance with a non-limiting embodiment, the central core 28 is formed with a heat-settable material, such as polyethylene, and the outer sheath is formed of an abrasion resistant material, such as polyamide, though it is contemplated that the central core 28 and the outer sheath 30 can be formed of the same heat-settable material. In an example outside the scope of the present invention, it is contemplated that the central core 28 could be formed of a non-heat-settable material, with the outer sheath 30 being formed of the heat-settable material. In accordance with another exemplary embodiment, the entirety of the weft yarns 24 can be provided as the bi-component yarns 26, wherein at least some or all of the bi-component yarns 26 can include a heat-settable central core 28. In accordance with yet another exemplary embodiment, the entirety of the warp yarns 22 can be provided as the bi-component yarns 26, with the central core 28 being formed having a first color material and the outer sheath 30 being formed of a different second color material. Accordingly, in view of the above, the entirety of the weft yarns 24 and the entirety of the warp yarns 22 can be provided as the bi-component yarns 26, with at least some of the weft bi-component yarns 26 having the central core 28 as the heat-settable material to facilitate forming the sleeve 10 having its self-wrapping configuration.

In accordance with another aspect, the thickness (t) of the outer sheath 30 of the bi-component yarns 26 is provided having a predetermined thickness such that upon the central core 28 being exposed, sufficient protection is provided by the woven sleeve 10 without immediate concern for damage to the elongate member 14. Accordingly, although the central core 28 is exposed, uncompromised performance of the elongate member(s) 14 is maintained by the sleeve 10 for a period of time (the period of time is generally dependent on the harness of the surrounding atmosphere, but in any case, a typical application could allow weeks or months for the sleeve 10 to be serviced and/or replaced without jeopardizing the useful performance of the elongate member(s)). The outer sheath 30 is provided having a maximum first outer diameter (D) and the central core 28 is provided having a maximum second outer diameter (d), wherein the maximum second outer diameter (d) is between 5 to 95 percent of the maximum first outer diameter (D). Accordingly, the outer sheath thickness (t) can range between 2½ to 47½ percent of the maximum outer diameter (D). In one exemplary embodiment, the maximum second outer diameter (d) is between 20 to 40 percent of the maximum first outer diameter (D), such that the outer sheath thickness (t) ranges between 30 to 40 percent of the maximum first outer diameter (D), and in one non-limiting embodiment, the maximum second outer diameter (d) is about 30 percent of the maximum first outer diameter (D), such that the outer sheath thickness (t) is about 35 percent of the maximum first outer diameter (D).

In accordance with another aspect, a method of constructing a protective sleeve 10 is provided. The method includes: weaving an elongate wall 12 having opposite edges 16, 17 extending lengthwise in generally parallel relation with one another between opposite ends 19, 21 with warp yarns 22 extending generally parallel to the opposite edges 16, 17 and weft yarns 24 extending generally transversely to the warp yarns 22 and providing at least some of the weft yarns 24 being formed from a heat-settable material; heat-setting the wall 12 to bias the opposite edges 16, 17 into overlapping relation with one another to bound a cavity 20 extending a longitudinal central axis 18 of the sleeve 10, wherein at least some of the warp yarns 22 and/or weft yarns 24 are bi-component yarns having a central core 28 and an outer sheath 30 encircling and encapsulating the central core 28, wherein central core 28 and the outer sheath 30 are different colors from one another, such that upon the outer sheath 30 being split or worn (FIG. 3B), the central core 28 becomes discernably visible, wherein at least some of the weft yarns (24) are provided as the bi-component yarns (26), with the weft bi-component yarns having the central core (28) as the heat-settable material.

Obviously, many modifications and variations of the present invention are possible in light of the above teachings. It is contemplated that all features of all claims and of all embodiments can be combined with each other, so long as such combinations would not contradict one another. It is, therefore, to be understood that within the scope of the appended claims, the invention may be practiced otherwise than as specifically described.

## Claims

1. A woven sleeve (10) for routing and protecting an elongate member (14), comprising:
a wall (12) having opposite edges (16,17) extending lengthwise in generally parallel relation with one another between opposite ends (19,21), said wall having warp yarns (22) extending generally parallel to said opposite edges and weft yarns (24) extending generally transversely to said warp yarns, at least some of said weft yarns being formed from a heat-settable material such that upon said heat-settable material being heat-set, said opposite edges are biased into overlapping relation with one another, **characterized in that** at least some of said warp yarns and/or said weft yarns including bi-component yarns (26) having a central core (28) and an outer sheath (30) encircling said central core, wherein said central core and said outer sheath are different colors from one another, such that upon a portion of said outer sheath being split or worn, said central core (28) becomes discernably visible, wherein at least some of the weft yarns (24) are provided as the bi-component yarns (26), with the weft bi-component yarns having the central core (28) as the heat-settable material.

2. The woven sleeve of claim 1, wherein the entirety of the weft yarns are provided as the bi-component yarns.

3. The woven sleeve of claim 1, wherein at least some of the warp yarns are provided as the bi-component yarns.

4. The woven sleeve of claim 3, wherein the entirety of the warp yarns are provided as the bi-component yarns.

5. The woven sleeve of claim 1, wherein the entirety of the weft yarns and the warp yarns are provided as the bi-component yarns, with at least some of the weft bi-component yarns having the central core as the heat-settable material.

6. The woven sleeve of claim 1, wherein the outer sheath is provided having a maximum first outer diameter and the central core is provided having a maximum second outer diameter, wherein the maximum second outer diameter is between 5 to 95 percent of the maximum first outer diameter.

7. The woven sleeve of claim 6, wherein the maximum second outer diameter is between 20 to 40 percent of the maximum first outer diameter.

8. A method of constructing a protective sleeve (10), comprising:
weaving an elongate wall (12) having opposite edges (16,17) extending lengthwise in generally parallel relation with one another between opposite ends (19,21) with warp yarns (22) extending generally parallel to the opposite edges and weft yarns (24) extending generally transversely to the warp yarns and providing at least some of the weft yarns being formed from a heat-settable material;
heat-setting the heat-settable material to bias the opposite edges (19,21) into overlapping relation with one another to bound a cavity extending a longitudinal central axis of the sleeve between the opposite ends,
**characterized in that** at least some of the warp yarns and/or weft yarns are bi-component yarns (26) having a central core (28) and an outer sheath (30) encircling and encapsulating the central core, wherein the central core and the outer sheath are different colors from one another, such that upon the outer sheath being split or worn, the central core becomes discernably visible, further including providing at least some of the weft yarns (24) as the bi-component yarns (26), with the weft bi-component yarns having the central core (28) as the heat-settable material.

9. The method of claim 8, further including providing the entirety of the weft yarns including the bi-component yarns.

10. The method of claim 8, further including providing at least some of the warp yarns including the bi-component yarns.

11. The method of claim 8, further including providing the outer sheath having a maximum first outer diameter and providing the central core having a maximum second outer diameter, wherein the maximum second outer diameter is between 5 to 95 percent of the maximum first outer diameter.

12. The method of claim 8, further including providing the maximum second outer diameter being between 20 to 40 percent of the maximum first outer diameter.

## Patentansprüche

1. Gewebehülse (10) zum Führen und Schützen eines länglichen Elements (14), umfassend:
eine Wand (12) mit gegenüberliegenden Rändern (16, 17), die sich in Längsrichtung im Wesentlichen parallel zueinander zwischen gegenüberliegenden Enden (19, 21) erstrecken, wobei die Wand Kettgarne (22), die sich im Wesentlichen parallel zu den gegenüberliegenden Rändern erstrecken, und Schussgarne (24) aufweist, die sich im Wesentlichen quer zu den Kettgarnen erstrecken, wobei zumindest einige der Schussgarne aus einem wärmefixierbaren Material gebildet sind, so dass bei Wärmefixierung des wärmefixierbaren Materials die gegenüberliegenden Ränder in eine überlappende Beziehung zueinander vorgespannt werden, **dadurch gekennzeichnet, dass** zumindest einige der Kettgarne und / oder der Schussgarne Bikomponentengarne (26) umfassen, die einen zentralen Kern (28) und eine den zentralen Kern umgebende äußere Ummantelung (30) aufweisen, wobei der zentrale Kern und die äußere Ummantelung voneinander unterschiedliche Farben aufweisen, so dass bei Spaltung oder Abnutzung eines Abschnitts der äußeren Ummantelung der zentrale Kern (28) erkennbar sichtbar wird, wobei zumindest einige der Schussgarne (24) als die Bikomponentengarne (26) vorgesehen sind, wobei die Schuss-Bikomponentengarne den zentralen Kern (28) als das wärmefixierbare Material aufweisen.

2. Gewebehülse nach Anspruch 1, wobei sämtliche Schussgarne als die Bikomponentengarne vorgesehen sind.

3. Gewebehülse nach Anspruch 1, wobei zumindest einige der Kettgarne als die Bikomponentengarne vorgesehen sind.

4. Gewebehülse nach Anspruch 3, wobei sämtliche Kettgarne als die Bikomponentengarne vorgesehen sind.

5. Gewebehülse nach Anspruch 1, wobei sämtliche Schussgarne und Kettgarne als Bikomponentengarne vorgesehen sind, wobei zumindest einige der Schuss-Bikomponentengarne den zentralen Kern als das wärmefixierbare Material aufweisen.

6. Gewebehülse nach Anspruch 1, wobei die äußere Ummantelung mit einem maximalen ersten Außendurchmesser vorgesehen ist und der zentrale Kern mit einem maximalen zweiten Außendurchmesser vorgesehen ist, wobei der maximale zweite Außendurchmesser zwischen 5 und 95 Prozent des maximalen ersten Außendurchmessers beträgt.

7. Gewebehülse nach Anspruch 6, wobei der maximale zweite Außendurchmesser zwischen 20 und 40 Prozent des maximalen ersten Außendurchmessers beträgt.

8. Verfahren zur Herstellung einer Schutzhülse (10), umfassend:
Weben einer länglichen Wand (12) mit gegenüberliegenden Rändern (16, 17), die sich in Längsrichtung im Wesentlichen parallel zueinander zwischen gegenüberliegenden Enden (19, 21) erstrecken, wobei sich Kettgarne (22) im Wesentlichen parallel zu den gegenüberliegenden Rändern erstrecken und sich Schussgarne (24) im Wesentlichen quer zu den Kettgarnen erstrecken, und Vorsehen, dass zumindest einige der Schussgarne aus einem wärmefixierbaren Material gebildet sind;
Wärmefixieren des wärmefixierbaren Materials, um die gegenüberliegenden Ränder (19, 21) in eine überlappende Beziehung zueinander vorzuspannen, um einen Hohlraum zu begrenzen, der sich entlang einer Längsmittelachse der Hülse zwischen den gegenüberliegenden Enden erstreckt,
**dadurch gekennzeichnet, dass** zumindest einige der Kettgarne und / oder Schussgarne Bikomponentengarne (26) sind, die einen zentralen Kern (28) und eine den zentralen Kern umgebende und einkapselnde äußere Ummantelung (30) aufweisen, wobei der zentrale Kern und die äußere Ummantelung voneinander unterschiedliche Farben aufweisen, so dass bei Spaltung oder Abnutzung der äußeren Ummantelung der zentrale Kern erkennbar sichtbar wird, ferner umfassend Vorsehen, dass zumindest einige der Schussgarne (24) als die Bikomponentengarne (26) vorgesehen sind, wobei die Schuss-Bikomponentengarne den zentralen Kern (28) als das wärmefixierbare Material aufweisen.

9. Verfahren nach Anspruch 8, ferner umfassend Vorsehen sämtlicher Schussgarne einschließlich der Bikomponentengarne.

10. Verfahren nach Anspruch 8, ferner umfassend Vorsehen zumindest einiger der Kettgarne einschließlich der Bikomponentengarne.

11. Verfahren nach Anspruch 8, ferner umfassend Vorsehen der äußeren Ummantelung mit einem maximalen ersten Außendurchmesser und Vorsehen des zentralen Kerns mit einem maximalen zweiten Außendurchmesser, wobei der maximale zweite Außendurchmesser zwischen 5 und 95 Prozent des maximalen ersten Außendurchmessers beträgt.

12. Verfahren nach Anspruch 8, ferner umfassend Vorsehen, dass der maximale zweite Außendurchmesser zwischen 20 und 40 Prozent des maximalen ersten Außendurchmessers beträgt.

## Revendications

1. Un manchon tissé (10) destiné à guider et à protéger un élément allongé (14), comprenant :
une paroi (12) ayant des bords opposés (16, 17) s'étendant longitudinalement de manière globalement parallèle l'un à l'autre entre des extrémités opposées (19, 21), ladite paroi présentant des fils de chaîne (22) s'étendant globalement parallèlement auxdits bords opposés et des fils de trame (24) s'étendant globalement transversalement auxdits fils de chaîne, au moins certains desdits fils de trame étant constitués d'un matériau thermodurcissable, de telle sorte que, lorsque ledit matériau thermodurcissable est thermodurci, lesdits bords opposés soient poussés à se chevaucher l'un l'autre, **caractérisée en ce qu'**au moins certains desdits fils de chaîne et/ou desdits fils de trame comprennent des fils bicomposants (26) présentant une âme centrale (28) et une gaine extérieure (30) entourant ladite âme centrale, ladite âme centrale et ladite gaine extérieure étant de couleurs différentes l'une de l'autre, de telle sorte que lorsqu'une partie de ladite gaine extérieure se fend ou s'use, ladite âme centrale (28) devienne clairement visible, au moins certains des fils de trame (24) étant réalisés sous forme de fils bicomposants (26), les fils de trame bicomposants présentant l'âme centrale (28) en tant que matériau thermodurcissable.

2. Le manchon tissé selon la revendication 1, dans lequel l'ensemble des fils de trame sont réalisés sous la forme de fils bicomposants.

3. Le manchon tissé selon la revendication 1, dans lequel au moins certains des fils de chaîne sont réalisés sous la forme de fils bicomposants.

4. Le manchon tissé selon la revendication 3, dans lequel l'ensemble des fils de chaîne sont réalisés sous la forme de fils bicomposants.

5. Le manchon tissé selon la revendication 1, dans lequel l'ensemble des fils de trame et des fils de chaîne sont réalisés sous la forme de fils bicomposants, au moins certains des fils de trame bicomposants présentant l'âme centrale en tant que le matériau thermodurcissable.

6. Le manchon tissé selon la revendication 1, dans lequel la gaine extérieure présente un premier diamètre extérieur maximal et l'âme centrale présente un deuxième diamètre extérieur maximal, le deuxième diamètre extérieur maximal étant compris entre 5 et 95 % du premier diamètre extérieur maximal.

7. Le manchon tissé selon la revendication 6, dans lequel le deuxième diamètre extérieur maximal est compris entre 20 et 40 % du premier diamètre extérieur maximal.

8. Un procédé de fabrication d'un manchon de protection (10), comprenant :
le fait de tisser une paroi allongée (12) ayant des bords opposés (16, 17) s'étendant longitudinalement de manière globalement parallèle l'un à l'autre entre des extrémités opposées (19, 21) au moyen de fils de chaîne (22) s'étendant globalement parallèlement aux bords opposés et de fils de trame (24) s'étendant globalement transversalement aux fils de chaîne; et le fait de réaliser au moins certains des fils de trame sous la forme d'un matériau thermodurcissable ;
le fait de thermodurcir le matériau thermodurcissable afin de faire se chevaucher les bords opposés (19, 21) de manière à ce qu'ils se chevauchent l'un l'autre afin de délimiter une cavité s'étendant le long d'un axe central longitudinal du manchon entre les extrémités opposées,
**caractérisé en ce qu'**au moins certains des fils de chaîne et/ou des fils de trame sont des fils bicomposants (26) comprenant une âme centrale (28) et une gaine extérieure (30) entourant et encapsulant l'âme centrale, l'âme centrale et la gaine extérieure étant de couleurs différentes l'une de l'autre, de sorte que lorsque la gaine extérieure se fend ou s'use, l'âme centrale devient clairement visible, et comprenant en outre le fait de réaliser au moins certains des fils de trame (24) sous forme de fils bicomposants (26), les fils de trame bicomposants ayant le matériau thermodurcissable en tant qu'âme centrale (28).

9. Le procédé selon la revendication 8, comprenant en outre le fait de réaliser l'ensemble des fils de trame sous forme de fils bicomposants.

10. Le procédé selon la revendication 8,
comprenant en outre le fait de réaliser au moins certains des fils de chaîne sous forme de fils bicomposants.

11. Le procédé selon la revendication 8, comprenant en outre le fait de prévoir la gaine extérieure de manière qu'elle ait un premier diamètre extérieur maximal et de prévoir l'âme centrale ayant un deuxième diamètre extérieur maximal, le deuxième diamètre extérieur maximal étant compris entre 5 et 95 % du premier diamètre extérieur maximal.

12. Le procédé selon la revendication 8,
comprenant en outre le fait de prévoir le deuxième diamètre extérieur maximal de manière à ce qu'il soit compris entre 20 et 40 % du premier diamètre extérieur maximal.
